# DEMANDE DE BREVET EUROPEEN

(11) **EP 3 508 416 A1**
(43) Date de publication de la demande: **10.07.2019**
(21) Numéro de dépôt: 18213032.8
(22) Date de dépôt: 17.12.2018
(51) Int. Cl.: B64C 3/14, B64C 21/00, B64C 23/06, B64D 29/00

(54) **ELÉMENT AÉRODYNAMIQUE D'UN AÉRONEF, POURVU D'UN ENSEMBLE D'ÉLÉMENTS PROTUBÉRANTS**

(30) Priorité: 08.01.2018 FR 1850114
(71) Demandeur: Airbus Operations S.A.S., 31060 Toulouse (FR)
(72) Inventeur: FAROUZ-FOUQUET, Mathias, 31300 TOULOUSE (FR)
(74) Mandataire: Gicquel, Olivier Yves Gérard

(57) **Abrégé**

- Elément aérodynamique d'un aéronef, pourvu d'un ensemble d'éléments protubérants.
- L'élément aérodynamique (1) est pourvu d'au moins un ensemble (E1, E2) d'éléments protubérants (12), chacun des éléments protubérants (12) est réalisé sous forme d'une nervure allongée et profilée, faisant saillie à une surface (S1, S2) de l'élément aérodynamique (1), et lesdits éléments protubérants (12) sont agencés à la surface (S1, S2) de l'élément aérodynamique (1), les uns à côté des autres, en étant orientés sensiblement parallèlement les uns par rapport aux autres de manière à ce que chacun d'entre eux génère un tourbillon, l'ensemble des tourbillons ainsi générés permettant d'atténuer une instabilité d'un écoulement d'air transversal.

## Description

### DOMAINE TECHNIQUE

La présente invention concerne un élément aérodynamique d'un aéronef, pourvu d'un ensemble d'éléments protubérants.

### ETAT DE LA TECHNIQUE

Bien que non exclusivement, ledit élément aérodynamique peut correspondre à une aile de l'aéronef, par exemple un avion de transport. Il peut également s'agir d'un autre élément (ou surface) aérodynamique (empennage, volet,...) de l'aéronef, comme précisé ci-dessous.

Dans le cas notamment d'une aile dite laminaire de l'aéronef, c'est-à-dire d'une aile permettant de maintenir un flux luminaire sur une distance importante, on sait qu'il n'est généralement pas possible d'augmenter la flèche de l'aile au-delà de 20° (au bord d'attaque de l'aile).

Une flèche d'aile au-delà de 20° au bord d'attaque, créée en effet une instabilité de l'écoulement d'air transversal (« crossflow » en anglais), en particulier pour des ailes laminaires où le gradient de pression est maintenu faible, c'est-à-dire inférieur ou égal à 0, sur une longue portion de la corde de l'aile. Cette instabilité d'écoulement d'air transversal est la limitation principale à l'augmentation de la flèche d'aile. Ce phénomène est caractérisé par l'apparition d'un flux d'air transverse le long de l'envergure, accompagné de tourbillons qui se déplacent le long de l'envergure de l'aile. Ceci empêche le maintien d'un flux laminaire. Or, une augmentation de la flèche permettrait d'augmenter les vitesses de vol en croisière de l'aéronef, sans augmenter la traînée et la consommation de carburant.

La présente invention a pour objet d'améliorer les conditions d'écoulement sur un élément aérodynamique d'un aéronef, tel qu'une aile, afin notamment, en particulier dans le cas d'une aile de type laminaire, d'empêcher l'apparition d'une instabilité d'écoulement d'air transversal même si l'aile présente une flèche élevée.

### EXPOSÉ DE L'INVENTION

Pour ce faire, la présente invention concerne un élément aérodynamique d'un aéronef.

Selon l'invention, ledit élément aérodynamique est pourvu d'au moins un ensemble d'éléments protubérants, chacun desdits éléments protubérants est réalisé sous forme d'une nervure allongée et profilée, faisant saillie à une surface de l'élément aérodynamique, et lesdits éléments protubérants dudit ensemble sont agencés à la surface de l'élément aérodynamique, les uns à côté des autres, en étant orientés sensiblement parallèlement les uns par rapport aux autres.

Ainsi, chacun des éléments protubérants génère, en raison de sa forme particulière et de son orientation particulière, comme précisé ci-dessus, un tourbillon et un seul. Ce tourbillon se combine avec un tourbillon (localisé au même endroit) d'une instabilité d'écoulement d'air transversal de manière à l'amortir. Par conséquent, grâce à l'effet combiné de l'ensemble de ces éléments protubérants, l'instabilité d'écoulement d'air transversal est réduite, et les conditions d'écoulement sont améliorées sur l'élément aérodynamique.

Dans un premier mode de réalisation, au moins certains desdits éléments protubérants sont incurvés, longitudinalement.

En outre, dans un second mode de réalisation, au moins certains desdits éléments protubérants sont rectilignes, longitudinalement.

En outre, avantageusement, au moins certains (mais de préférence l'ensemble) desdits éléments protubérants sont orientés selon une direction inclinée d'un angle donné par rapport à une direction d'un écoulement d'air transversal s'écoulant le long de l'élément aérodynamique.

Par ailleurs, de façon avantageuse, l'élément aérodynamique comporte un bord d'attaque et un premier ensemble d'éléments protubérants, ledit premier ensemble d'éléments protubérants étant agencé le long du bord d'attaque sur une première face de l'élément aérodynamique aboutissant audit bord d'attaque, lesdits éléments protubérants dudit premier ensemble étant orientés transversalement audit bord d'attaque.

De plus, avantageusement, l'élément aérodynamique comporte un second ensemble d'éléments protubérants, ledit second ensemble d'éléments protubérants étant agencé le long du bord d'attaque sur une seconde face de de l'élément aérodynamique aboutissant audit bord d'attaque, lesdits éléments protubérants dudit second ensemble étant orientés transversalement audit bord d'attaque.

Par ailleurs, dans un mode de réalisation préféré, chacun desdits éléments protubérants présente au moins l'une des caractéristiques (ou dimensions) suivantes :
- une longueur comprise entre 1 millimètre et 30 millimètres ;
- une épaisseur inférieure ou égale à 0,5 millimètre ; et
- une hauteur comprise entre 5 et 50 micromètres.

De plus, avantageusement, les éléments protubérants sont espacés les uns des autres d'une distance comprise entre 2 et 8 millimètres, et de préférence égale à 5 millimètres.

Dans le cadre de la présente invention, ledit élément aérodynamique qui est pourvu desdits éléments protubérants peut correspondre à au moins une partie de l'un des éléments suivants de l'aéronef :
- une aile ;
- un volet ;
- un empennage vertical ;
- un empennage horizontal ;
- une partie de fuselage ;
- une nacelle de moteur.

La présente invention concerne également un aéronef, en particulier un avion de transport, qui comprend au moins un élément aérodynamique pourvu d'éléments protubérants, tel que celui décrit ci-dessus.

### BRÈVE DESCRIPTION DES FIGURES

Les figures annexées feront bien comprendre comment l'invention peut être réalisée. Sur ces figures, des références identiques désignent des éléments semblables. Plus particulièrement :
- la figure 1 est une vue schématique, en perspective, d'un aéronef auquel est appliquée la présente invention ;
- les figures 2 et 3 sont des vues schématiques, respectivement en perspective et en vue frontale, d'un bord d'attaque d'une partie d'aile d'un aéronef, pourvue d'ensembles d'éléments protubérants ;
- les figures 4 et 5 illustrent schématiquement en vues en perspective, respectivement deux modes de réalisation différents d'un élément protubérant ;
- les figures 6 et 7 montrent schématiquement des écoulements d'air générés autour d'un élément protubérant ;
- la figure 8 est une vue schématique, en perspective, d'un bord d'attaque d'une partie d'aile d'un aéronef, pourvue d'ensembles d'éléments protubérants, sur laquelle on a mis en évidence des écoulements d'air générés ; et
- la figure 9 est un schéma permettant de montrer la combinaison, entre d'une part, des tourbillons générés par des éléments protubérants, et d'autre part, des tourbillons d'une instabilité d'un écoulement d'air transversal, engendrant une réduction de l'instabilité de l'écoulement d'air transversal.

### DESCRIPTION DÉTAILLÉE

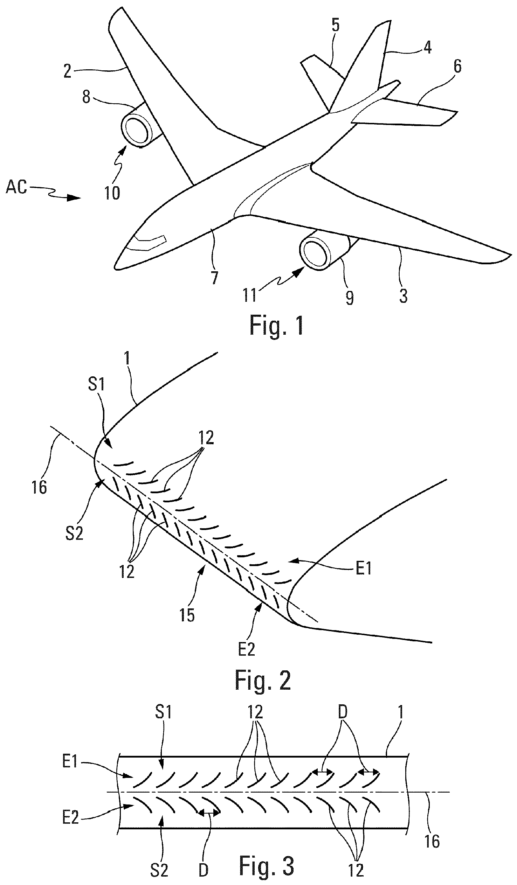

La figure 1 montre schématiquement un aéronef AC, en particulier un avion de transport, qui est pourvu au moins d'un élément aérodynamique (non montré spécifiquement), tel que celui représenté sur la figure 2.

Dans le cadre de la présente invention, l'élément aérodynamique 1 (figure 2) peut correspondre à l'un des éléments (ou surfaces) suivants ou une partie de l'un des éléments (ou surfaces) suivants de l'aéronef AC, représentés sur la figure 1 :
- une aile 2, 3 ;
- un empennage vertical 4 ;
- un empennage horizontal 5, 6 ;
- une partie du fuselage 7 ;
- une nacelle 8, 9 d'un moteur 10, 11 ; ou
- un volet (non représenté spécifiquement).

A titre d'illustration (non limitative), l'élément aérodynamique 1 considéré dans la suite de la description correspond à une partie (ou tronçon) de l'une des ailes 2, 3 de l'aéronef AC.

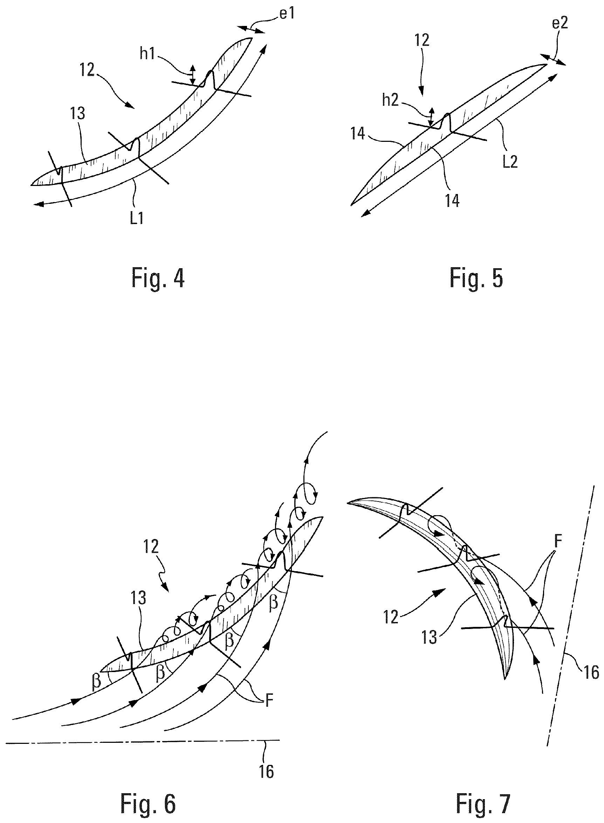

Selon l'invention, cet élément aérodynamique 1 est pourvu, comme représenté notamment sur les figures 2 et 3, d'au moins un ensemble E1, E2 d'éléments protubérants 12. Chacun desdits éléments protubérants 12 est réalisé sous forme d'une nervure 13, 14 (figures 4 et 5) allongée (selon une direction dite longitudinale) et profilée, et il est agencé de manière à faire saillie par rapport à une surface S1, S2 de l'élément aérodynamique 1. De plus, les éléments protubérants 12 dudit ensemble E1, E2 sont agencés à la surface S1, S2 de l'élément aérodynamique 1, les uns à côté des autres, en étant orientés sensiblement parallèlement les uns par rapport aux autres.

Ainsi, chacun des éléments protubérants (ou proéminents) 12 génère, en raison de sa forme particulière en relief et de son orientation, comme précisé ci-dessous, un tourbillon qui va participer à la réduction de l'instabilité d'écoulement d'air transversal sur l'élément aérodynamique 1.

Les éléments protubérants 12 peuvent être réalisés de différentes manières.

Dans un premier mode de réalisation, l'ensemble des éléments protubérants 12 sont réalisés, à chaque fois, sous forme d'une nervure 13 profilée. Comme représenté sur la figure 4, cette nervure 13 est incurvée longitudinalement (c'est-à-dire selon sa direction longitudinale), dans le plan de la surface de l'élément aérodynamique sur laquelle elle est agencée.

En outre, dans un deuxième mode de réalisation, l'ensemble des éléments protubérants 12 sont réalisés, à chaque fois, sous forme d'une nervure 14 profilée. Comme représenté sur la figure 5, cette nervure 14 est rectiligne longitudinalement (c'est-à-dire selon sa direction longitudinale), dans le plan de la surface de l'élément aérodynamique sur laquelle elle est agencée.

Par ailleurs, dans un troisième mode de réalisation, l'élément aérodynamique 1 peut comporter sur au moins une première partie (ou tronçon) des éléments protubérants 12 réalisés sous forme de la nervure 13 et sur au moins une seconde partie (ou tronçon) des éléments protubérants 12 réalisés sous forme de la nervure 14.

Dans un mode de réalisation préféré, chacun desdits éléments protubérants 12 présente au moins l'une et de préférence l'ensemble des caractéristiques (ou dimensions) suivantes, représentées sur les figures 4 et 5 :
- une longueur L1, L2 comprise entre 1 millimètre et 30 millimètres ;
- une épaisseur e1, e2 inférieure ou égale à 0,5 millimètre ; et
- une hauteur h1, h2 comprise entre 5 et 50 micromètres, et de préférence sensiblement égale à 15 micromètres.

Chacun desdits éléments protubérants 12 est caractérisé par un rapport de longueur (« aspect ration » en anglais) supérieur à 1.

L'orientation des éléments protubérants 12 sur l'élément aérodynamique 1 est définie en relation directe avec la direction d'un écoulement d'air le long le long de l'élément aérodynamique 1, comme précisé ci-dessous.

Par ailleurs, dans l'exemple représenté sur les figures 2 et 3, l'élément aérodynamique 1, notamment une aile, comporte un bord d'attaque 15 avec une ligne d'attache 16 et deux surfaces S1 et S2 de part et d'autre de ce bord d'attaque 15.

Dans cet exemple, l'élément aérodynamique 1 est pourvu d'un premier ensemble E1 d'éléments protubérants 12. L'ensemble E1 d'éléments protubérants 12 est agencé le long du bord d'attaque 15 sur la surface (ou face) S1 de l'élément aérodynamique 1, qui about audit bord d'attaque 15 par le haut. Les éléments protubérants 12 dudit ensemble E1 sont orientés transversalement au bord d'attaque 15, comme précisé ci-dessous.

De plus, dans cet exemple des figures 2 et 3, l'élément aérodynamique 1 comporte également un second ensemble E2 d'éléments protubérants 12. Cet ensemble E2 d'éléments protubérants 12 est agencé le long du bord d'attaque 15 sur la surface (ou face) S2 de l'élément aérodynamique 1, qui aboutit au bord d'attaque 15 par le bas. Les éléments protubérants 12 dudit ensemble E2 sont également orientés transversalement au bord d'attaque 15.

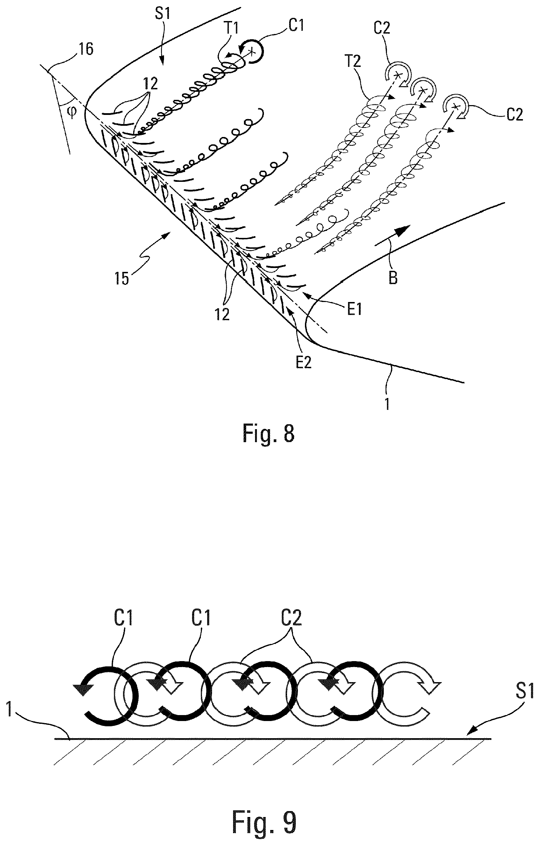

Les éléments protubérants 12 sont agencés en aval de la ligne d'attache 16 (dans le sens montré par une flèche B sur la figure 8) à approximativement 1 % de la corde de l'élément aérodynamique 1 formant une aile, et ils sont espacés les uns des autres (le long de la ligne d'attache 16) d'une distance D (figure 3) comprise entre 2 et 8 millimètres, et égale de préférence à 5 millimètres.

L'orientation des éléments protubérants 12 est donc déterminée en relation directe avec la direction de l'écoulement d'air sur l'élément aérodynamique 1.

L'écoulement arrivant de la ligne d'attache 16 et à proximité de cette dernière décrit une trajectoire courbe, comme illustré par des flèches F sur les figures 6 et 7.

Les éléments protubérants 12 sont orientés en étant inclinés d'un angle β donné par rapport à la direction de l'écoulement d'air transversal, illustré par les flèches F sur les figures 6 et 7, s'écoulant le long de l'élément aérodynamique 1, sensiblement transversalement à la ligne d'attache 16, dans le sens montré par la flèche B sur la figure 8.

L'orientation et l'agencement des éléments protubérants 12, dont la direction longitudinale forme localement un angle β avec l'écoulement F, sont telles qu'un tourbillon T1 et un seul est créé en aval (par rapport au sens indiqué par la flèche B) de chaque élément protubérant 12, comme représenté sur la figure 8. Comme ce tourbillon T1 est unique (un seul tourbillon T1 par élément protubérant 12), il ne peut pas devenir turbulent en étant mélangé avec un second tourbillon.

De plus, chaque élément protubérant 12 est orienté pour que le tourbillon T1 généré par cet élément protubérant 12 tourne dans un sens C1 qui est opposé au sens C2 (de rotation) d'un tourbillon T2 de l'instabilité d'écoulement d'air transversal. Ainsi, localement, en aval de chaque élément protubérant 12, les deux tourbillons T1 et T2 se combinent et s'atténuent (ou s'annulent) mutuellement.

En d'autres termes, les tourbillons T1 générés par les éléments protubérants 12 amortissent les tourbillons T2 de l'instabilité de l'écoulement d'air transversal, comme illustré sur la figure 9,

Cette instabilité de l'écoulement d'air transversal qui présente des effets négatifs sur l'écoulement sur l'élément aérodynamique 1, notamment en limitant l'écoulement laminaire, est donc réduit (voire annulé) par les éléments protubérants 12. Ainsi, le cas échéant, la couche limite laminaire est maintenue sur l'élément aérodynamique 1.

Dans l'exemple d'un élément aérodynamique 1 à bord d'attaque 15, représentant une aile 2, 3, l'orientation des éléments protubérants 12 par rapport à l'écoulement F autour du rayon de nez du bord d'attaque 15 est telle que chaque tourbillon T1 individuel (par élément protubérant 12) tourne dans le sens des aiguilles d'une montre sur une aile 2 droite, et dans le sens inverse des aiguilles d'une montre sur une aile 3 gauche.

Les éléments protubérants 12, tels que décrits ci-dessus, ne sont pas des générateurs de vortex. En effet, un générateur de vortex prélève, de façon usuelle, de l'énergie cinétique dans le flux au-dessus de la couche limite de la surface sur laquelle il est agencé, et il amène cette énergie vers le bas dans la couche limite pour lui apporter de l'énergie et éviter un détachement de l'écoulement d'air. Les éléments protubérants 12 générateurs de tourbillons T1 individuels, décrits ci-dessus, présentent une action totalement différente et un but différent. Les éléments protubérants 12 restent à faible hauteur dans la couche limite laminaire et ne prélèvent pas d'air de l'écoulement à l'extérieur de la couche limite.

L'ensemble E1, E2 d'éléments protubérants 12, tel que décrit ci-dessus, présente de nombreux avantages. En particulier :
- il permet de maintenir un flux laminaire au-dessus d'une aile qui présente une flèche *ϕ* (figure 8) de bord d'attaque 15, supérieure à 20° ;
- il permet des vitesses de croisière plus élevées pour l'aéronef ;
- il permet de prévoir des flux luminaires sur les ailes d'avions longs courriers ;
- il permet une réduction de la traînée même à des nombres de Mach au-dessus de 0,77, et ainsi une réduction de la consommation de carburant ;
- il peut être testé très simplement, à l'aide d'une étude de mécanique des fluides numérique de type CFD (pour « Computational Fluid Dynamics ») et/ou à l'aide d'essais en soufflerie et/ou en vol ;
- il est de type passif et ne requiert aucune énergie, ni aucun dispositif mécanique ;
- il peut être facilement intégré dans un bord d'attaque moulé ou éventuellement imprimé ; et
- il ne génère sensiblement aucune masse supplémentaire.

Les éléments protubérants 12, tels que décrits ci-dessus, peuvent donc, notamment, être montés :
- sur les ailes 2, 3 de l'aéronef AC (figure 1) ;
- sur des volets de l'aéronef AC ;
- sur l'empennage vertical 4 de l'aéronef AC ;
- sur l'empennage horizontal 5, 6 de l'aéronef AC ;
- sur le fuselage 7 de l'aéronef AC ; ou
- sur la nacelle 8, 9 d'un moteur 10, 11 de l'aéronef AC.

Ces éléments protubérants 12 peuvent être fabriqués de différentes manières.

Selon une première méthode de fabrication, qui est simple, les éléments protubérants sont moulés directement dans l'élément aérodynamique 1, par exemple dans le bord d'attaque d'une aile.

Selon une deuxième méthode de la fabrication, les éléments protubérants sont gravés par électroérosion dans la matrice de l'outillage.

En outre, selon une troisième méthode de fabrication, des pièces rapportées (ou inserts) cylindriques sont rapportées sur l'élément aérodynamique 1. Ces pièces rapportées (ou inserts) affleurent à la surface de l'élément aérodynamique. Sur la surface extérieure de ces pièces rapportées, la forme des éléments protubérants est en relief.

Dans une variante de réalisation, les éléments protubérants sont rapportés par collage sur une bande appliquée sur l'élément aérodynamique, c'est-à-dire que la bande collante (englobant une partie importante du bord d'attaque de l'élément aérodynamique) est imprimée des formes des éléments protubérants.

## Revendications

1. Elément aérodynamique d'un aéronef,
**caractérisé en ce qu'**il comporte un bord d'attaque (15) et un premier ensemble (E1) d'éléments protubérants (12) agencé le long du bord d'attaque (15) sur une première face de l'élément aérodynamique (1) aboutissant audit bord d'attaque (15), lesdits éléments protubérants (12) dudit premier ensemble (E1) étant orientés transversalement audit bord d'attaque (15), chacun desdits éléments protubérants (12) est réalisé sous forme d'une nervure (13, 14) allongée et profilée, faisant saillie à une surface (S1, S2) de l'élément aérodynamique (1), et **en ce que** lesdits éléments protubérants (12) dudit premier ensemble (E1) sont agencés à la surface (S1, S2) de l'élément aérodynamique (1), les uns à côté des autres, en étant orientés sensiblement parallèlement les uns par rapport aux autres.

2. Elément aérodynamique selon la revendication 1,
**caractérisé en ce qu'**au moins certains desdits éléments protubérants (12) sont incurvés, longitudinalement.

3. Elément aérodynamique selon l'une des revendications 1 et 2,
**caractérisé en ce qu'**au moins certains desdits éléments protubérants (12) sont rectilignes, longitudinalement.

4. Elément aérodynamique selon l'une quelconque des revendications précédentes,
**caractérisé en ce qu'**au moins certains desdits éléments protubérants (12) sont orientés selon une direction inclinée d'un angle donné (β) par rapport à une direction d'un écoulement d'air transversal (F) s'écoulant le long de l'élément aérodynamique (1).

5. Elément aérodynamique selon l'une quelconque des revendications précédentes,
**caractérisée en ce qu'**il comporte un second ensemble (E2) d'éléments protubérants (12), ledit second ensemble (E2) d'éléments protubérants (12) étant agencé le long du bord d'attaque (15) sur une seconde face de l'élément aérodynamique (1) aboutissant audit bord d'attaque (15), lesdits éléments protubérants (12) dudit second ensemble (E2) étant orientés transversalement audit bord d'attaque (15).

6. Elément aérodynamique selon l'une quelconque des revendications précédentes,
**caractérisé en ce que** chacun desdits éléments protubérants (12) présente au moins l'une des caractéristiques suivantes :
- une longueur (L1, L2) comprise entre 1 millimètre et 30 millimètres ;
- une épaisseur (e1, e2) inférieure ou égale à 0,5 millimètre ; et
- une hauteur (h1, h2) comprise entre 5 et 50 micromètres.

7. Elément aérodynamique selon l'une quelconque des revendications précédentes,
**caractérisé en ce que** les éléments protubérants (12) sont espacés les uns des autres d'une distance (D) comprise entre 2 et 8 millimètres.

8. Elément aérodynamique selon l'une quelconque des revendications précédentes,
**caractérisé en ce qu'**il correspond à au moins une partie de l'un des éléments suivants de l'aéronef (AC) :
- une aile (3, 4) ;
- un volet ;
- un empennage vertical (4) ;
- un empennage horizontal (5, 6) ;
- une partie de fuselage (7) ;
- une nacelle (8, 9) de moteur (10, 11).

9. Aéronef,
**caractérisé en ce qu'**il comprend au moins un élément aérodynamique (1) selon l'une quelconque des revendications précédentes.
